# EUROPEAN PATENT APPLICATION

(11) **EP 1 039 730 A1**
(43) Date of publication of application: **27.09.2000**
(21) Application number: 99302184.9
(22) Date of filing: 22.03.1999
(51) Int. Cl.: H04M 3/50

(54) **Improved automatic announcement system**

(71) Applicant: LUCENT TECHNOLOGIES INC., Murray Hill, New Jersey 07974-0636 (US)
(72) Inventor: De Boer, Albert J., Zaandam 1507 XK (NL)
(74) Representative: Williams, David John

(57) **Abstract**

There is disclosed a method of selecting between sets of data in an automatic announcement system, comprising: allocating all sets of the data to an insert command; and providing a switch command for selecting between the sets of the data. The sets of data may correspond to different versions of the same data set, wherein the switch command selects one of the versions. The versions of the sets of data may correspond to a plurality of different languages. The data may comprise a recorded speech announcement. The data may comprise a pre-determined sequence of recorded speech announcements. The sets of data may correspond to independent data sets. The independent data sets may be associated with a common automatic announcement.

## Description

### Field of the Invention

The present invention relates to the provision of automated announcements, and particularly to improvements in the coding of variable data elements of automated announcements.

### Background to the Invention

Automated speech announcements on telephone systems can be found in a plurality of applications. Such automated speech announcements have application in, for example, automated ordering of services, where pre-recorded message announcements are used, and the user follows instructions given in the announcements.

In one particular example an automated announcement is used to inform a caller that a user of the telephone system has changed their telephone number. For example, if a user is allocated a new telephone number, then a recorded message may be provided such that anyone who dials the user's old telephone number will hear a recorded message advising of the new telephone number.

In such a system, the automated announcement system is configured to issue an announcement in response to a call made to the old telephone number. The announcement includes two types of information. The first type of information is fixed, or static information or data. This is information or data which does not change. For example an announcement that the number called is no longer valid will be identical for all users, and is not user dependent. This information or data is the same for every announcement. Of course the static information or data may need to be duplicated a number of times corresponding to the number of languages supported.

The second type of information is variable information or data. This is information which may be specific to the user and which will therefore differ (i.e. vary) between users. An example of variable information or data is an announcement of the users new telephone number: this is unique to the user and will therefore vary for each announcement for different users.

In current automated announcement systems, a unique command, known as an insert command, is allocated not only to each of the sets of various data, but also to each of the language versions of the data. Thus if a system supports ten languages, ten insert commands are associated with each set of variable data.

It is therefore an object of the present invention to provide an automated announcement system in which the allocation of commands to the variable data is simplified.

### Summary of the Invention

According to the invention there is provided a method of selecting between sets of data in an automatic announcement system, comprising: allocating all sets of the data to an insert command; and providing a switch command for selecting between the sets of the data.

The sets of data may correspond to different versions of the same data set, wherein the switch command selects one of the versions. The versions of the sets of data may correspond to a plurality of different languages. The data may comprise a recorded speech announcement. The data may comprise a pre-determined sequence of recorded speech announcements. The sets of data may correspond to independent data sets. The independent data sets may be associated with a common automatic announcement.

The sets of data may comprise variable data.

The invention will now be described by way of example with reference to the accompanying drawings in which:

### Brief Description of the Figures

Figure 1 illustrates static commands in a known automatic announcement system;
Figure 2 further illustrates static commands in a known automatic announcement system;
Figures 3(a) to 3(c) illustrates insert commands in a known automatic announcement system;
Figure 4 illustrates insert commands according to the present invention;
Figure 5 illustrates switch commands according to the present invention;
Figure 6 illustrates an example of a command sequence according to the prior art; and
Figure 7 illustrates an example of a command sequence according to the present invention.

### Description of Preferred Embodiment

The present invention may be utilised in any automated announcement application. However, the invention is described hereinbelow with reference to a particular example. The particular example given herein is that of an automated announcement used to inform a caller that a user of the telephone system has changed their telephone number.

The automated announcement system is configured to issue an announcement in response to a call made to the old telephone number. The announcement includes two types of information as discussed hereinabove. The first type of information is fixed, or static information or data. This is information or data which does not change.

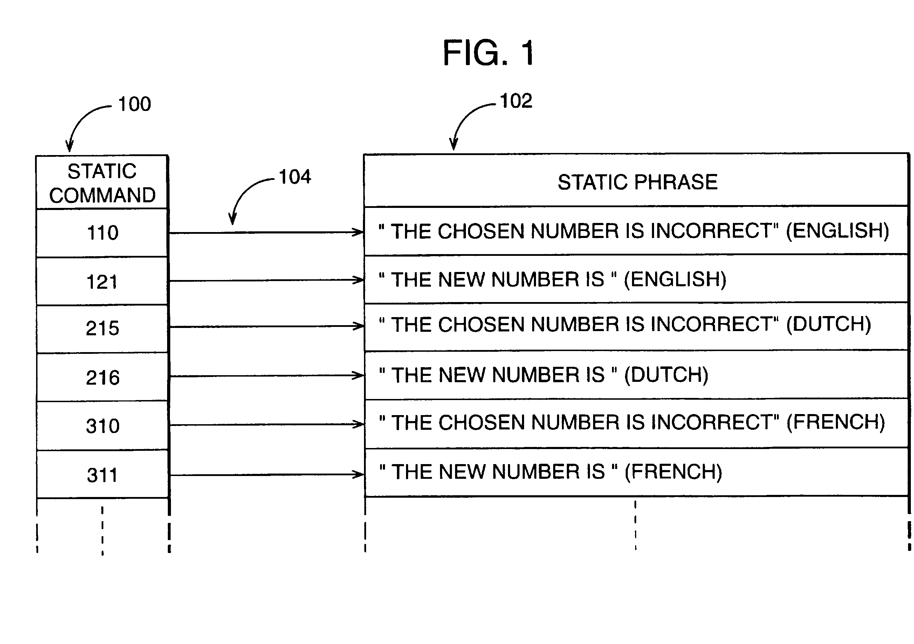

The second type of information is variable information or data. This is information which may be specific to the user and may therefore differ (i.e. vary) between users. An example of variable information or data is an announcement of the users new telephone number: this is unique to the user and will therefore vary for each announcement for different users. Referring to Figure 1 there is illustrated a list 102 of static phrases which may be used in an example automated announcement system. The static phrases are associated with static commands, which are illustrated in a corresponding list 100. These commands are termed 'static' since the recorded phrase associated with them is fixed throughout the use of the automated system.

There are, in this simple example, two static phrases which are required to be announced. These static phrases are "the chosen number is incorrect" and "the new number is". However, to ensure flexibility of the system, these static phrases must be provided in all possible languages supported by the system. In the example of Figure 1 the association of the two static phrases with three different languages is shown.

The static commands in the column 100 are mapped to the static phrases in the column 102, as indicated by the arrows 104. Static command 110 is mapped to "the chosen number is incorrect" in English, and static phrase 121 is mapped to "the new number is" in English. Static phrase 215 is mapped to "the chosen number is incorrect" in Dutch, and static phrase 216 is mapped to "the new number is" in Dutch. Static phrase 310 is mapped to "the chosen number is incorrect" in French, and static phrase 311 is mapped to "the new number is" in French.

For the purposes of this description the term static data (or static phrase) refers to a fixed phrase such as "the chosen number is incorrect" in any language. A particular one of the languages in which the static data may be represented is referred to herein as a version of the static data. Thus the term "the chosen number is incorrect" (in English) is a first version of the particular static data, and the term "the chosen number is incorrect" (in Dutch) is a second version of the particular static data.

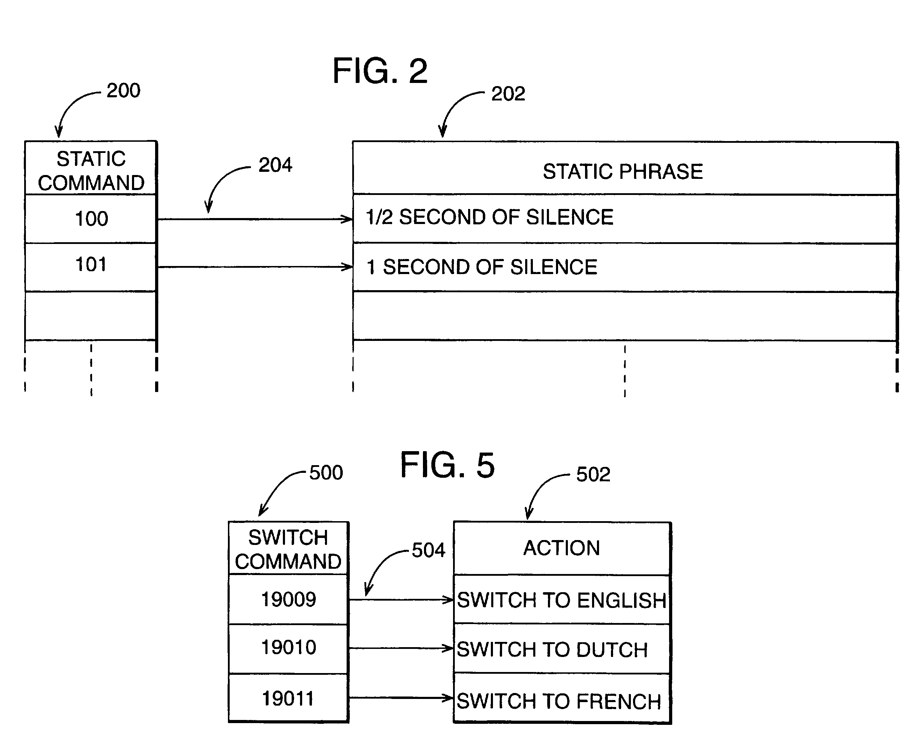

There are in addition, other static, or fixed, actions associated with other static commands. In Figure 2 there is shown a number of static commands in a column 200 mapped to static phrases in a column 202, as indicated by the arrows 204. The static command 100 is mapped to a recording of a half second silence or pause, and the static command 101 is mapped to a recording of a one second silence or pause.

Variable data in the automated system is associated with so-called insert commands. Variable data, in this example, is a new number which has been allocated to the telephone user and which is to be announced as part of the automated announcement.

The possible numbers to be announced obviously range from 0 to 9. Combinations of these numbers are put together in a sequence to represent a telephone number. Thus the system stores a voice recording of each number 0 to 9 in all languages to be supported. In addition the system should ideally store different versions of these recordings with different voice inflections. Thus when a telephone number is announced all digits of the number should preferably be announced with a flat inflection, except for the last digit which should be announced with a falling inflection. Thus the system preferably stores a recorded version of all numbers 0 to 9 in all languages with a flat inflection, and all numbers from 0 to 9 in all languages with a falling inflection. Each of the numbers is stored in association with a static command.

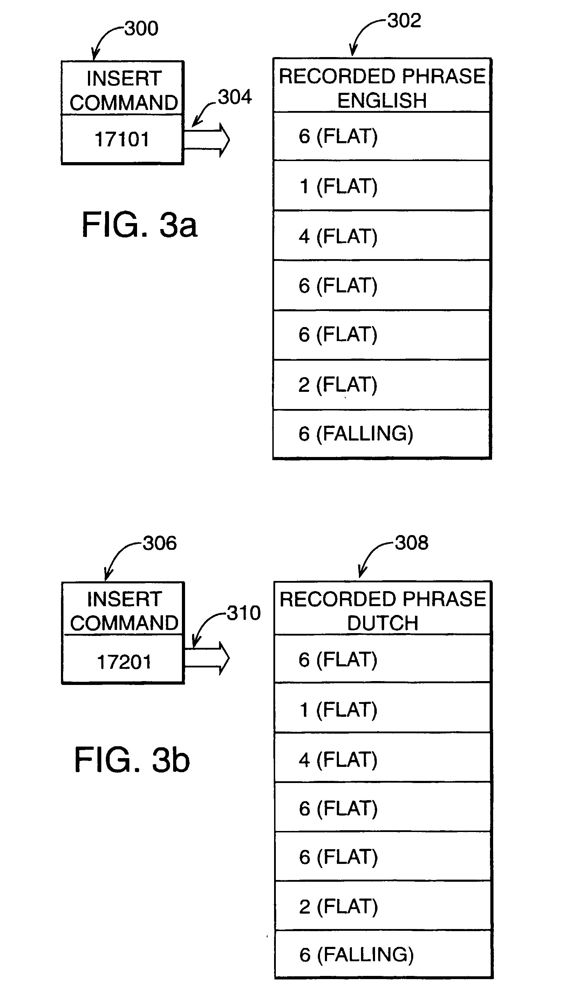

Then, for a particular user, a variable data list or sequence is compiled based on a concatenation of several static commands representing recorded numbers. In the present example, it is assumed that the new number allocated to a particular user is 6146626. The sequence of static commands associated with this number will be the static commands associated with the flat inclination of numbers 6, 1, 4, 6, 6, 2 and the static command associated with the falling inclination of the number 6. The sequence of pre-recorded announcements for this number sequence is then mapped to a particular insert command. This is illustrated in Figure 3(a), where the first version of the variable data set (in English) is shown in a column 302 mapped to the insert command 17101 in a column 300. The mapping is generally indicated by the arrow 304, and in response to the insert command the sequence of numbers in column 302 will be sequentially announced.

However, the defined number sequence (or variable data set) must be stored for all supported languages (i.e. all versions of the variable data set). Thus a different insert command is provided for each version of the variable data associated with a different language. Thus in Figure 3(b) the version of the variable data set (in Dutch) is shown in a column 306 mapped to the insert command 17201 in a column 306. The mapping is generally indicated by the arrow 310, and in response to the insert command 17201 the sequence of numbers in column 306 will be sequentially announced. The version of the variable data set (in French) is shown in a column 314 mapped to the insert command 17301 in a column 312. The mapping is generally indicated by the arrow 316, and in response to the insert command 17301 the sequence of numbers in column 314 will be sequentially announced.

Thus the insert commands are used to expand data defined by static commands into one version of a variable data list in the system. Variable data is, for example, a new telephone number of a user.

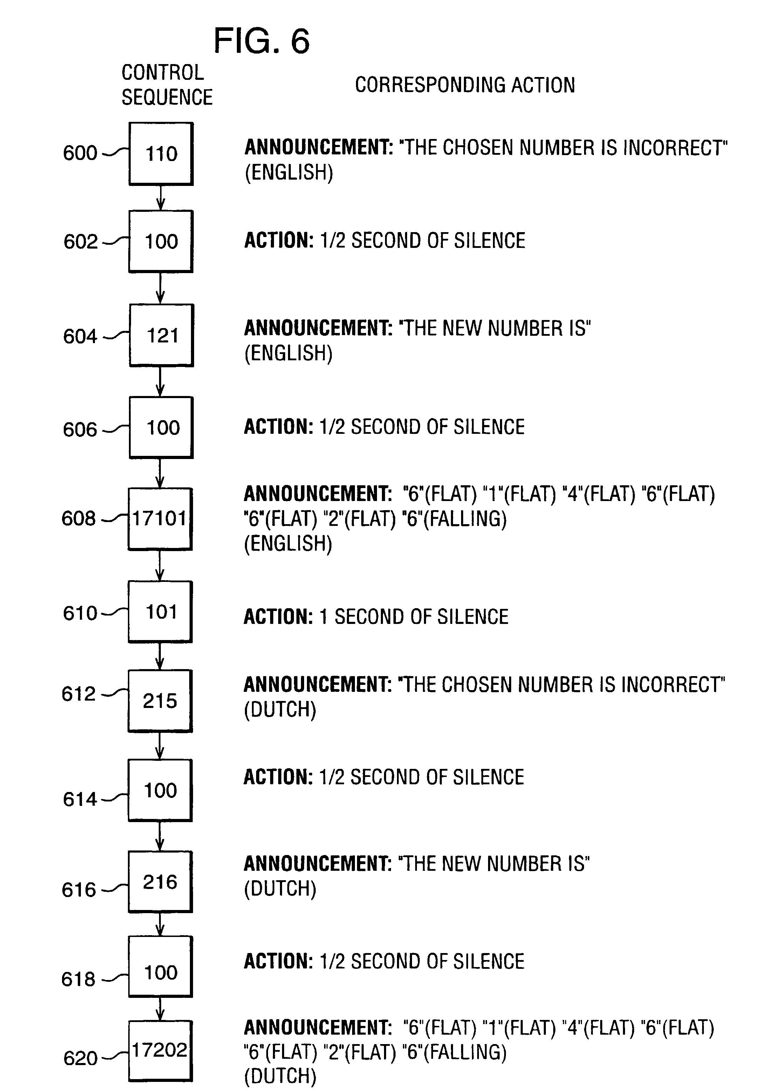

The system is then programmed using the static phrases and the insert commands to generate the appropriate message in response to a telephone call to the user's old telephone number. The system is programmed as shown in Figure 6, to follow a certain control sequence based upon static phrases and insert commands, on the basis that it is required to make the announcement in both English and Dutch.

In response to a telephone call to the users old telephone number, the sequence of commands in the left hand column is followed, and the actions in the right hand column taken. Thus the system is implemented by the recorded phrases being stored in the announcement hardware. The commands (static and insert commands) are run in software, and are associated either with a recording in the announcement hardware. The announcement hardware is able to voice back the announcement message with a list of commands as inputs.

Thus in a step 600 an announcement that "the chosen number is incorrect" is made in English. In a step 602 the system plays half a second of silence, and then in a step 604 the announcement is made in English that the "new number is". A further play of half a second of silence in step 606 is followed by step 608, and the new number is announced in English. In a step 610 there is a one second play of silence before in step 612 an announcement is made in Dutch that "the chosen number is incorrect". After a half second play of silence in step 614, an announcement is made in Dutch that "the new number is" in step 616. In step 618 there is a half second play of silence before in step 620 the new number is announced in Dutch.

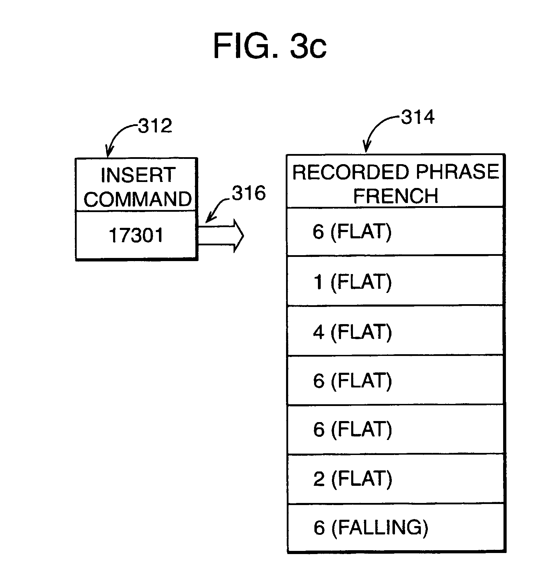

This known scheme has a disadvantage in that a separate insert command is required for each version of the same data. Thus in the example shown in Figure 3 each set of variable data requires an unique insert command for each version or language to be supported. For each telephone number therefore a plurality of insert commands is required corresponding to the number of versions or languages to be supported.

There may be a number of other insert commands other than the single type described above. Examples of other insert commands are time, date, number, and price. In the prior art technique an insert command is required for all the different languages required for each of these commands.

In the prior art, with the specific example given herein of three languages and two recorded announcements ("the chosen number is incorrect"; "the new number is"), a total of six unique insert commands are required. For each extra recorded announcement, a further three unique insert commands are required.

In accordance with the present invention a new technique is proposed in which a single insert command can be used to select any one of the versions of a particular set of variable data. That is, a separate insert command is not required for each language version of the same telephone number.

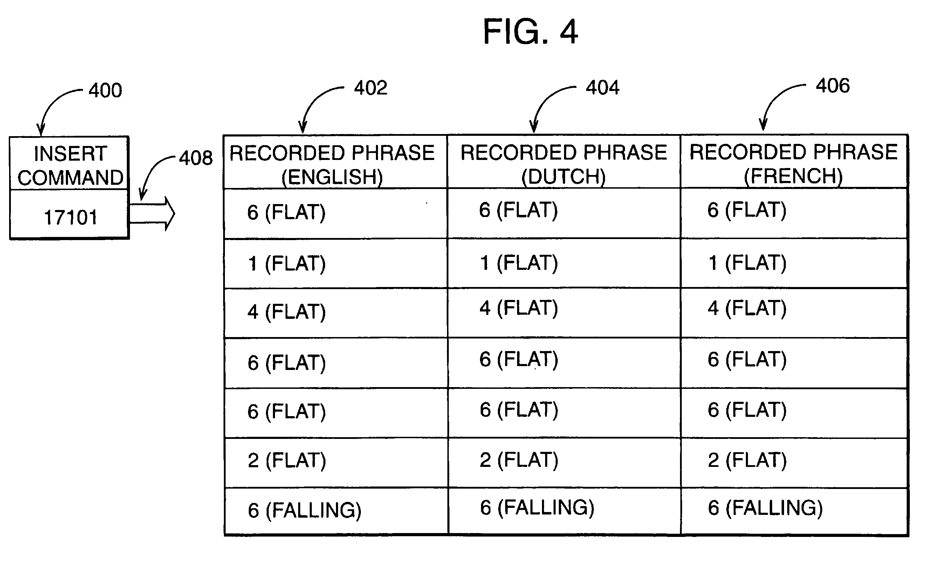

As shown in Figure 4, each of the versions of the variable data is associated with a single insert command. Thus the English version in column 402, the Dutch version in column 404, and the French version in column 406 are all associated with the single insert command 17101 in column 400. The arrow 408 generally indicates the mapping of the insert command 17101 to the variable data sets 402, 404, 406.

To select between any one of the versions of the variable data, a new command is introduced, called a switch command. The switch command is used to switch between the versions of the variable data. Thus each of the versions has a switch command associated therewith. Referring to Figure 5 there is shown a number of switch commands in a column 500 mapped to a number of switch actions in a column 502. The mapping of the switch commands is indicated by the arrows 504. The switch command 19009 is mapped to the English version of the data, the switch command 19010 is mapped to the Dutch version of the data, and the switch command 19011 is mapped to the French version of the data. The switch command thus points to a particular data list.

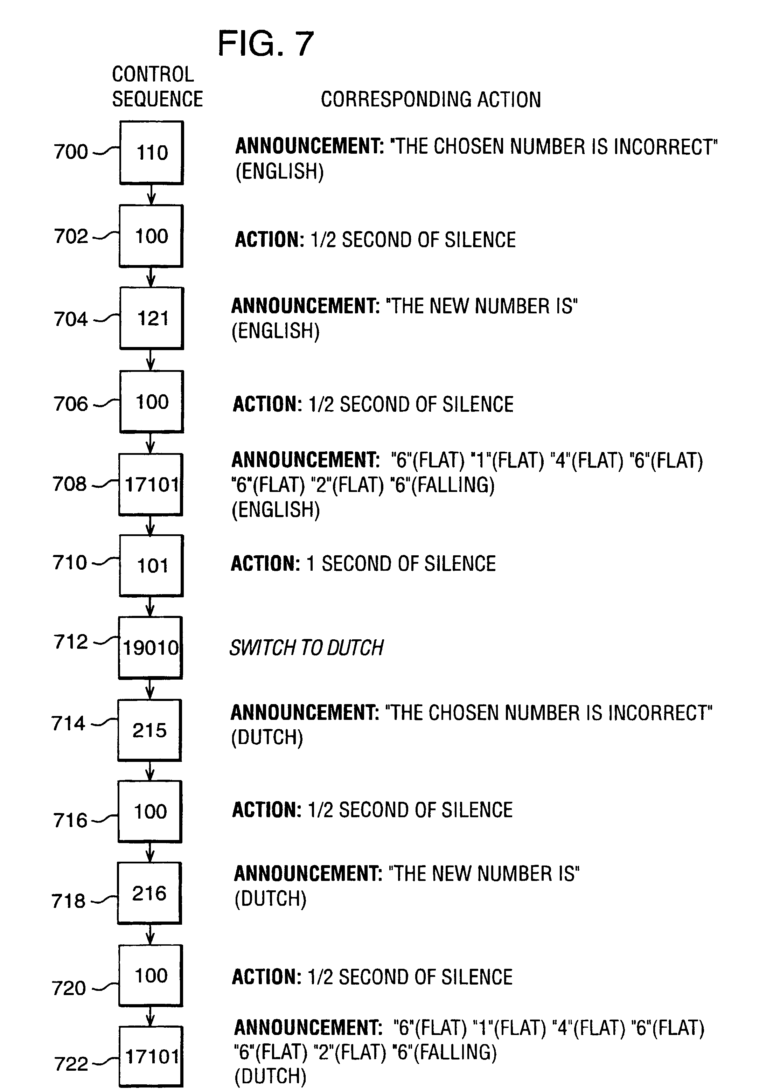

The system is then programmed using the static phrases, the insert commands and the switch commands to generate the appropriate message in response to a telephone call to the user's old telephone number. The system is programmed as shown in Figure 7, to follow a certain control sequence based upon static phrases and insert commands, on the basis as in the example of Figure 6 that it is required to make the announcement in both English and Dutch.

Thus in a step 700 an announcement that "the chosen number is incorrect" is made in English. In a step 702 the system plays a half a second of silence, and then in a step 704 the announcement is made in English that "the new number is". A further play of half a second of silence in step 706is followed by step 708 in which the new number is announced in English. In a step 710 there is a one second play of silence before in step 712 a switch command switches the selected language to Dutch. In step 714 an announcement is made in Dutch that "the chosen number is incorrect". After a half second play of silence in step 716, an announcement is made in Dutch that "the new number is" in step 718. In step 720 there is a half second play of silence before in step 722 the new number is announced in Dutch.

Thus it is no longer needed to have a single insert command for each version of a variable data set, i.e. a single insert command is not required for each language version of a telephone number. Thus insert commands no longer need to be duplicated.

According to the invention, only one insert command is required for all languages For each recorded message. Thus in the specific example given herein of three languages and two recorded announcements, two insert commands and three switch commands are required. For each extra recorded announcement a single additional insert command is required, and no additional switch commands. Thus there is a significant reduction in the overall number of commands required in comparison with the prior art.

The switch commands of the present invention may also be further utilised. Take, for example, a recorded announcement which is required to announce three numbers (i.e. three sets of variable data) in a single announcement. In the prior art each of the three sets has a single insert command associated therewith. Utilising the switch command of the present invention, the three sets of variable data can each be mapped to a single shared insert command, and three switch commands provided to switch between the sets of data.

The switch commands may in fact merely be to switch the next of the three sets of data associated with the announcement, all of the sets having the same insert command. Another announcement may have three different numbers or data sets associated therewith, and the same three switch commands can be used. Thus, once again, in this embodiment of the data sets being independent of each other, the switch command may be utilised. In this example the independent sets of data are linked by being associated with a specific recorded announcement.

## Claims

1. A method of selecting between sets of data in an automatic announcement system, comprising: allocating all sets of the data to an insert command; and providing a switch command for selecting between the sets of the data.

2. The method of claim 1 in which the sets of data correspond to different versions of the same data set, wherein the switch command selects one of the versions.

3. The method of claim 2 in which the versions of the sets of data correspond to a plurality of different languages.

4. The method of any one of claims 1 to 3 in which the sets of data comprise recorded speech announcement.

5. The method of any one of claims 1 to 4 in which the sets of data correspond to pre-determined sequences of recorded speech announcements.

6. The method of claim 1 in which the sets of data correspond to independent data sets.

7. The method of claim 6 in which the independent data sets are associated with a common automatic announcement.

8. The method of any one of claims 1 to 7 in which the sets of data comprise variable data.
